# EUROPEAN PATENT APPLICATION

(11) **EP 1 833 140 A2**
(43) Date of publication of application: **12.09.2007**
(21) Application number: 07103594.3
(22) Date of filing: 06.03.2007
(51) Int. Cl.: H02K 1/30, H02K 15/14, H02K 1/27

(54) **Motor, method for manufacturing rotor, and electric power steering apparatus**

(30) Priority: 10.03.2006 JP 2006066083
(71) Applicant: JTEKT Corporation, Osaka-shi Osaka 542-8502 (JP)
(72) Inventor: Tsuji, Yasuaki, Chuo-ku Osaka-shi, Osaka 542-8502 (JP)
(74) Representative: Selting, Günther

(57) **Abstract**

A motor is provided with a rotor of which an inner portion made from a material having a lower density than an outer portion is fitted inside the outer portion around whose outer surface magnets are fixed; wherein the inner portion is shrink fitted or pressure fitted inside the outer portion. The rotor is manufactured by a simple process without the need to keep the rotor at high temperature for a set period of time as in the case of sinter bonding. A plurality of cut out holes is formed in the inner portion to make the rotor more lightweight.

## Description

### BACKGROUND OF THE INVENTION

This invention relates to a motor that is made more lightweight by designing the construction of the rotor.

An electric power steering apparatus, which drives a steering assistance motor in response to turning of the steering wheel and assists steering by applying the torque of that motor to a steering mechanism, detects the steering torque by a torque sensor that is located in the middle of a steering shaft that connects a steering wheel to the steering mechanism, and performs control for increasing or decreasing the drive current of the steering assistance motor based on the detected steering torque.

In this kind of electric power steering apparatus, when the steering assistance motor is not being driven, and when the direction of rotation of the motor is changed, there is a problem in that the moment of inertia, which is proportional to the mass of the rotating portion of the motor, is applied to the steering shaft by way of the steering mechanism that is driven with motor. In other words, when the motor is not being driven after removing hands from the steering wheel after turning the steering wheel, time is required to return to the straight state, or when changing the direction of rotation of the motor by turning the steering wheel back after the steering wheel has been turned, there is a response delay, so there is a problem in that feel of steering becomes poor. In order to solve this problem, it is desired that the rotor, which is the rotating portion of the steering assistance motor, be made lightweight, and prior methods of making the rotor more lightweight by designing the construction of the rotor, have been disclosed.

A brushless motor, which is widely used as a steering assistance motor, comprises: a stator that is installed and fastened inside a housing, and a rotor that is supported by the housing so that it can rotate freely and that has magnets fixed around its outer surface. In order to increase the magnetic force of the magnets, the rotor of this brushless motor is constructed so that it uses a ferrous material having excellent magnetic properties such as high magnetic permeability and a high saturation magnetic flux density; however, the mass of this kind of ferrous material is large. Therefore, in Japanese Patent Application Laid-Open No.2003-189516 and Japanese Patent Application Laid-Open No.2003-79082, construction of a rotor is disclosed in which the rotor is made lightweight by using a ferrous material only for an outer portion to which the magnets are fixed and which requires excellent magnetic properties, and integrating that outer portion with an inner portion that is made from a low-density material and that is located on the inside of that outer portion.

### BRIEF SUMMARY OF THE INVENTION

However, in the case of the rotor that is disclosed in Japanese Patent Application Laid-Open No.2003-189516 and Japanese Patent Application Laid-Open No.2003-79082, at least one of the outer portion and inner portion is made of a sintered material, and the two portions are integrated together using sinter bonding that bonds the two portions together by keeping the outer portion and the inner portion in the fitted state at a temperature of 800°C or more for a set period of time (for example, 30 minutes), so there is a problem in that the process is complicated.

Taking the aforementioned problem into consideration, it is an object of the present invention to provide a lightweight rotor for which the process of integrating the output portion, which is made of ferrous material and to which magnets are fixed, with the inner portion, which is made of a material having lower density than the ferrous material, is made simple.

Another object of the present invention is to provide a method for manufacturing a rotor in which the process of integrating the outer portion with the inner portion, which is made from a material having lower density than the outer portion, can be performed easily.

A further object of the present invention is to provide an electric power steering apparatus for which the rotor of the steering assistance motor is made lightweight and improves the feel of steering.

The motor according to a first aspect of the invention comprises: a rotor of which an inner portion made from a material having a lower density than an outer portion is fitted inside the outer portion around whose outer surface magnets are fixed; wherein the inner portion is shrink fitted or pressure fitted inside the outer portion.

With the first aspect of the invention, the rotor is constructed by integrating the inner portion with the outer portion by shrink fitting or pressure fitting, thus it is possible to simplify the process of integrating the inner portion with the outer portion without the need of keeping the rotor at high temperature for a set period of time as in the case of sinter bonding. Also, the inner portion of the rotor is made of a material having lower density than that of the outer portion, so it is possible to make the rotor lighter by the amount of the difference of weight of the ferrous material.

The motor according to a second aspect of the invention is characterized by forming cut out holes in the inner portion.

With the second aspect, cut out holes are formed in the inner portion of the rotor, so it is possible to make the rotor even lighter by the amount of the weight of the cut out holes.

The above and further objects and features of the invention will be more fully apparent from the following detailed description with accompanying drawings.

### BRIEF DESCRIPTION OF THE SEVERAL VIEWS OF THE DRAWINGS

FIG. 1 is a vertical cross-sectional drawing showing the construction of the motor of the present invention;
FIG. 2 is a horizontal cross-sectional drawing of the rotor as seen from the section II-II of FIG. 1;
FIG. 3 is a drawing that explains the construction for fastening the outer portion and inner portion of the rotor;
FIG. 4 is a drawing that explains the construction for fastening the outer portion and inner portion of the rotor; and
FIG. 5 is a drawing showing an example of an electric power steering apparatus provided with the motor of the present invention.

### DETAILED DESCRIPTION OF THE INVENTION

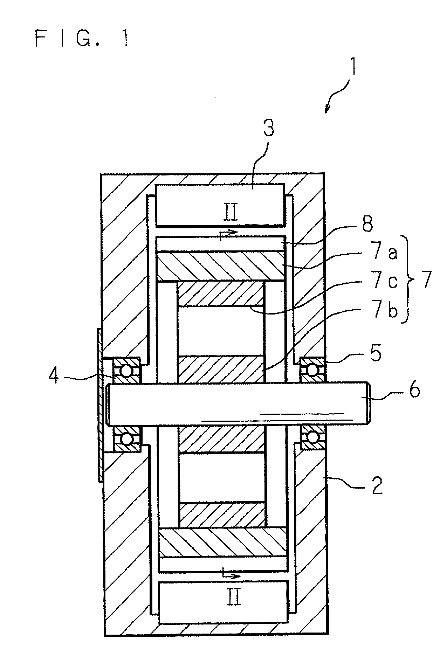

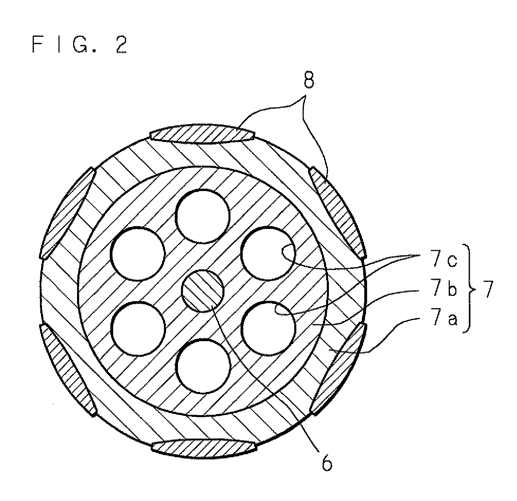

The preferred embodiments of the present invention will be explained below based on the drawings. FIG. 1 is a vertical cross-sectional drawing showing the construction of the motor of the present invention; and FIG. 2 is a horizontal cross-sectional drawing of the rotor as seen from the section II-II of FIG. 1. As shown in FIG. 1, the motor 1 comprises: a stator 3 that is installed and fastened inside a housing 2; a rotating shaft 6 that is supported by the housing 2 via bearings 4, 5 so that it can rotate freely; and a rotor 7 that is installed and fastened around the surface of the rotating shaft 6 so that it is concentric with the rotating shaft 6.

The housing 2 is a cylindrical member having end walls on both ends in the axial direction; and the stator 3 is fastened around the inner surface of the housing 2. A plurality of cores are arranged in the circumferential direction around the inner surface of the stator 3 so that they face each other with the rotating shaft 6 interposed, and conductive wire coils are wrapped around respective cores to form magnetic poles.

The rotor 7 is a cylindrical member that is pressure fitted around the rotating shaft 6. A plurality of permanent magnets 8 are fixed around the outer surface of the rotor 7 so that the polarities of the magnets 8 alternate in the circumferential direction. The housing 2 has openings in the end walls on both ends, and bearings 4, 5 are installed in both of the openings in the end walls. Also, as shown in FIG. 1, the bearings 4, 5 that are located on both ends of the rotor 7 support the rotating shaft 6, and the rotor 7 is such that the position of both ends in the axial direction are in line with those of the stator 3, and faces the stator 3 through a small air gap in the radial direction.

The motor 1 that is constructed in this way is such that pairs of two opposing magnetic poles of the stator 3 form fields, and by successively changing the current that flow in the coils of the respective magnetic poles, the fields that are generated by respective pairs of magnetic poles are rotated in one direction, and the permanent magnets 8 receive torque from the rotating fields, thereby causing the rotor 7 to rotate.

In the motor 1 of the present invention that operates in this way, the rotor 7 comprises: an outer portion 7a around whose outer surface permanent magnets 8 are fixed, and an inner portion 7b that is fitted and fixed inside the outer portion 7a. In order to increase the magnetic force of the permanent magnets 8, the outer portion 7a is a thin cylindrical body that is made using a ferrous material having excellent magnetic properties such as high magnetic permeability and high saturation magnetic flux density. On the other hand, the inner portion 7b is a column body made using a material having a lower density than that of the outer portion 7a such as aluminum or magnesium, and it is integrated with the outer portion 7a as described below.

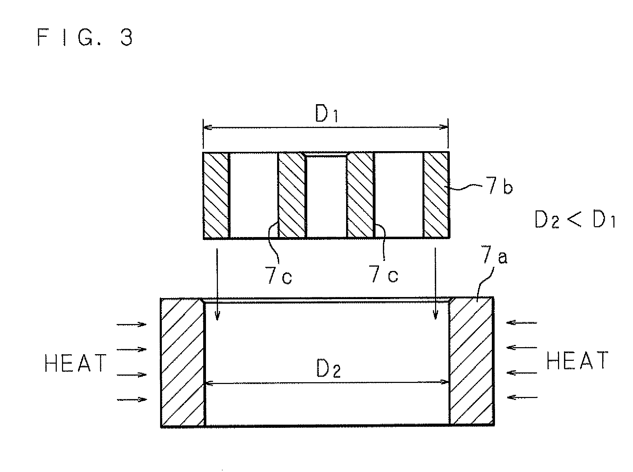

FIG. 3 is a drawing that explains the construction for fastening the outer portion 7a and inner portion 7b of the rotor 7. The outer diameter of the column inner portion (column-shaped second member) 7b is D1. On the other hand, the inner diameter of the thin cylindrical outer portion (cylindrical-shaped first member) 7a is D2, and is a little smaller than the outer diameter D1 of the inner portion 7b (D2 < D1), and there is adequate interference between the two portions. After preparing the outer portion 7a and inner portion 7b with these dimensions, the outer portion 7a is heated in order to make the inner diameter D2 of the outer portion 7a larger than the outer diameter D1 of the inner portion 7b, and as shown by the arrow in FIG. 3, the inner portion 7b is fitted inside the expanded outer portion 7a, after which the outer portion 7a is cooled so that it contracts, making a shrink fitting that integrates the outer portion 7a and the inner portion 7b.

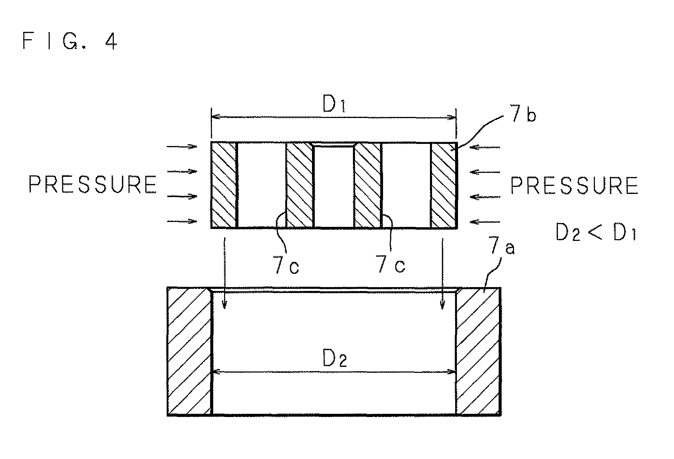

As shown in FIG. 4, instead of this kind of shrink fitting, it is possible to position the outer portion 7a and inner portion 7b so that they are concentric and have adequate interference between them, and to apply pressure in the axial direction to one or both of the outer portion 7a and inner portion 7b to form a pressure fitting between the two and to integrate the outer portion 7a and the inner portion 7b.

The rotor 7 that is integrated by this kind of shrink fitting or pressure fitting, is joined by the surface pressure that is generated in a fitting portion between the outer portion 7a and the inner portion 7b so there is no movement in the circumferential direction or axial direction. The surface pressure that is generated in the fitting portion between the outer portion 7a and the inner portion 7b is given as the product of the interference of the fitting portion and the contact area of the fitting portion, so adequate interference and contact area are selected according to the required surface pressure. Also, the permanent magnets 8 are evenly spaced and fixed around the outer surface of the rotor 7 after the rotor 7 has been formed by integrating together the outer portion 7a and the inner portion 7b so that the polarities of the respective magnets 8 alternate in the circumferential direction.

In the motor 1 of the present invention, the rotor 7 is formed by fastening the outer portion 7a, around whose outer surface permanent magnets 8 are fixed, together with the inner portion 7b by shrink fitting or pressure fitting in this way, so it is possible to manufacture the rotor 7 by simple processing without the need to keep the rotor at high temperature of a set period of time as in sinter bonding. Also, since the inner portion 7b is made using a material having a lower density than the outer portion 7a, it is possible to make the rotor 7 more lightweight by the amount of the difference with that of the mass of a ferrous material.

Moreover, as shown in FIG. 2, there is a plurality of cut out holes 7c (6 holes in the example shown in FIG. 2)having a circular cross section formed in the inner portion 7b, which is a column body, and it is possible to further make the rotor 7 lightweight by the weight of these cut out holes 7c. In FIG. 2, six cut out holes 7c having circular cross sections are formed in the inner portion 7b of the rotor 7, however, the shape and number of these cut out holes 7c is not limited by this embodiment, and may be any suitable shape and number that meet the conditions of satisfying the required strength of the inner portion 7b, and maintaining rotation balance.

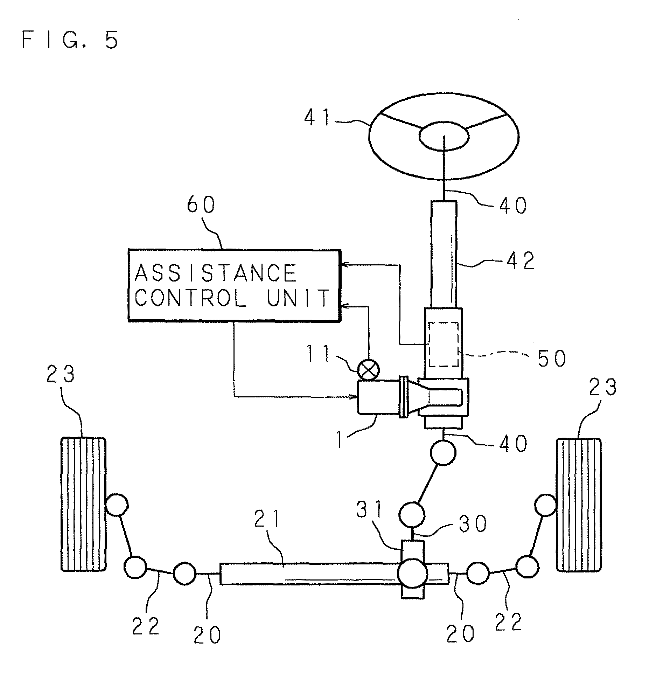

The motor 1 that is constructed as described above is used, for example, as the steering assistance motor for an electric power steering apparatus. FIG. 5 is a drawing that shows an example of an electric power steering apparatus that comprises the motor 1 of the present invention.

The electric power steering apparatus comprises a well-known rack and pinion type steering mechanism that comprises: a rack shaft 20 that is supported inside a rack housing 21 that extends across the horizontal direction of the vehicle body (not shown in the figure) so that the rack shaft 20 can freely move in the axial direction, and a pinion shaft 30 that is supported inside a pinion housing 31 that intersects in the middle of the rack housing 21 so that the pinion shaft 30 can freely rotate. Both ends of the rack shaft 20 that protrudes outward from both ends of the rack housing 21 are connected to the left and right wheels 23, 23 by way of respective tie rods 22, 22, and the top end of the pinion shaft 30 that protrudes outward from one end of the pinion housing 31 is connected to a steering wheel 41 by way of a steering shaft 40. Moreover, a pinion (not shown in the figure) is formed on the bottom portion of the pinion shaft 30 that extends inside the pinion housing 31, and that pinion, in the intersecting portion with the rack housing 21, engages with rack teeth that are formed along the length on the outer surface of the rack shaft 20.

With the construction described above, when the steering wheel 41 used for steering is turned, the turning is transmitted to the pinion shaft 30 by way of the steering shaft 40, and the rotation of the pinion shaft 30 is converted to movement in the axial direction of the rack shaft 20, and this movement pushes and pulls the left and right wheels 23, 23 by way of the respective tie rods 22, 22, which steers the wheels 23, 23.

In the middle of a column housing 42 that supports the steering shaft 40 there is a torque sensor 50 that detects the steering torque that is applied to the steering shaft 40 when the steering wheel 41 is turned, and the motor 1 of the invention is installed at a position below the torque sensor 50.

The motor 1 is installed on the outside of the column housing 42 so that it is orthogonal to the shaft center; for example, a worm that is fastened to the output end of the motor 1 that extends inside the column housing 42 engages with a worm wheel that is fastened around the outer surface of the steering shaft 40, and the rotation of the motor 1 is transmitted to the steering shaft 40 after being decelerated by the worm and worm wheel. With this construction, the rotation of the motor 1 is decelerated and transmitted to the steering shaft 40, and applies a torque to the pinion shaft 30 that is connected to the bottom end of the steering shaft 40, and the steering that is described above is assisted by the rotation of the motor 1.

The motor 1 is driven by a control instruction that is given from an assistance control unit 60 by way of a motor drive circuit (not shown in the figure). The detected value of the steering torque that is detected by the torque sensor 50 is given to the assistance control unit 60, then the assistance control unit 60 issues the control instruction to the motor 1 based on that detected value and performs assistance control that increases or decreases the drive current for the motor 1. Also, there is a motor current sensor 11 located in the steering assistance motor 1, and the detected value of the drive current for the motor 1 that is detected by the motor current sensor 11 is given to the assistance control unit 60, which calculates the difference between the motor current value and the drive current value, and performs feedback control that corrects the drive current that is supplied to the steering assistance motor 1 based on the difference. The motor current sensor 11 can also be located in the assistance control unit 60.

The steering assistance motor 1 that is used in the electric power steering apparatus that is constructed in this way comprises the rotor 7 that is made lightweight by having the outer portion 7a and the inner portion 7b, which is made using a material that has lower density than the outer portion 7a, and this decreases the moment of inertia of the rotor 7 that is applied to the steering shaft 40 when the motor 1 is not being driven, or when the direction of rotation of the motor 1 is changed, which improves the feel of steering. Furthermore, a plurality of cut out holes 7c are formed in the inner portion 7b, and this lightens the rotor 7 and further decreases the moment of inertia of the rotor 7 that is applied to the steering shaft 40, which improves the feel of steering even more.

## Claims

1. A motor (1), comprising a rotor (7) of which an inner portion (7b) made from a material having a lower density than an outer portion (7a) is fitted inside said outer portion (7a) around whose outer surface magnets (8) are fixed;
**characterized in that** said inner portion (7b) is shrink fitted or pressure fitted inside said outer portion (7a).

2. The motor (1) of claim 1, wherein
cut out holes (7c) are formed in said inner portion (7b).

3. The motor (1) of claim 1, wherein
said outer portion (7a) is made of ferrous material, and said inner portion (7b) is made of aluminum or magnesium.

4. A method for manufacturing a rotor (7) of which an inner portion (7b) made from a material having a lower density than an outer portion (7a) is fitted inside said outer portion (7a) around whose outer surface magnets are to be fixed,
**characterized by** comprising the steps of:
preparing a cylindrical-shaped first member (7a) to be said outer portion (7a), and a column-shaped second member (7b) to be said inner portion (7b), so that the inner diameter of said first member (7a) is less than the outer diameter of said second member (7b);
heating said first member (7a) so that the inner diameter of said first member (7a) becomes greater than the outer diameter of said second member (7b);
fitting said second member (7b) inside of said expanded first member (7a); and
cooling said first member (7a) to integrate said first member (7a) and said second member (7b) by shrink fitting.

5. A method for manufacturing a rotor (7) of which an inner portion (7b) made from a material having a lower density than an outer portion (7a) is fitted inside said outer portion (7a) around whose outer surface magnets are to be fixed,
**characterized by** comprising the steps of:
preparing a cylindrical-shaped first member (7a) to be said outer portion (7a), and a column-shaped second member (7b) to be said inner portion (7b), so that the inner diameter of said first member (7a) is less than the outer diameter of said second member (7b);
positioning said prepared first and second members (7a, 7b) so that they are concentric; and
applying pressure to one or both of said first member (7a) and said second member (7b) in the axial direction to fit said second member (7b) inside said first member (7a) and integrate said first member (7a) and second member (7b) by pressure fitting.

6. The manufacturing method of claim 4 or claim 5, wherein
said first member (7a) is made from a ferrous material, and said second member (7b) is made from aluminum or magnesium.

7. An electric power steering apparatus comprising: a steering wheel (41); a steering mechanism (20, 30) that is connected to said steering wheel (41); and a motor (1) that assists steering by applying its torque to said steering mechanism (20, 30);
**characterized in that** said motor (1) is the motor (1) of any one of the claims 1 to 3.
